# EUROPÄISCHE PATENTSCHRIFT

(11) **EP 0 905 999 B1**
(45) Veröffentlichungstag und Bekanntmachung des Hinweises auf die Patenterteilung: **18.08.2004**
(21) Anmeldenummer: 98116909.7
(22) Anmeldetag: 08.09.1998
(51) Int. Cl.: H04R 3/02, H04M 9/08

(54) **Kraftfahrzeugkommunikationsvorrichtung**
Motor vehicle communication system
Système de communication dans un véhicule automobile

(30) Priorität: 27.09.1997 DE 19742797
(43) Veröffentlichungstag der Anmeldung: 31.03.1999
(73) Patentinhaber: Grundig Car InterMedia System GmbH, 90471 Nürnberg (DE)
(72) Erfinder: Mueller, Jürgen GRUNDIG AG, 90762 Fuerth (DE)
(74) Vertreter: Manitz, Finsterwald & Partner

(56) Entgegenhaltungen:
- DE-A- 4 300 848
- DE-C- 4 447 028
- FR-A- 2 731 123
- BREINING C ET AL: "FREISPRECHEN - DIE JAGD NACH AKUSTISCHEN ECHOS. HANDS-FREE TELECOMMUNICATION - GOING ON AN ECHO HUNT" FREQUENZ, SCHIELE UND SCHON GMBH. BERLIN, DE, Bd. 51, Nr. 9/10, 1. September 1997 (1997-09-01), Seiten 245-253, XP000751083 ISSN: 0016-1136

## Beschreibung

Die Erfindung betrifft eine Kraftfahrzeugkommunikationsvorrichtung mit dem im Oberbegriff des Anspruchs 1 angegebenen Merkmalen.

Es ist bereits bekannt, in Kraftfahrzeugen Mobiltelefone einzusetzen. Um eine hörerlose Kommunikation zu ermöglichen, werden in diesen Fahrzeugen Freisprecheinrichtungen zum Einsatz gebracht, die entweder einen eigenen Verstärker und einen eigenen Lautsprecher besitzen oder einen Line-Ausgang aufweisen, über welchen empfangene Telefonsignale an ein Autoradio mit Line-Eingang übertragen werden, um dessen Verstärker zu nutzen. Derartige bekannte Kraftfahrzeugkommunikationsvorrichtungen neigen sehr leicht zu Rückkopplungen und Halleffekten.

Aus DE-A-196 20 980 ist ein Audiogerät für ein Fahrzeug bekannt. Das Audiogerät weist wenigstens zwei Verstärkungskanäle auf, welche in Abhängigkeit des Signals einer Signalquelle jeweils ein Ausgangssignal liefert. Mittels dieses Ausgangssignals sind Lautsprecher ansteuerbar. Das Audiogerät ist von wenigstens einer ersten Signalquelle mit einem Audiosignal oder einer zweiten Signalquelle mit einem Sprachsignal einer Telefoneinheit ansteuerbar. Die Verstärkungsfaktoren der Verstärkungskanäle sind einzeln einstellbar. Das Audiogerät schaltet die Verstärkungsfaktoren der Verstärkungskanäle in Abhängigkeit der das Audiogerät ansteuernden Signalquelle um.

Aus DE-A-43 42 917 ist eine Einrichtung zum Umschalten eines Lautsprechers zwischen mindestens zwei NF-Signalquellen, insbesondere zum Umschalten eines Lautsprechers in einem Kraftfahrzeug-Innenraum zwischen einem Audiogerät und einem Funkgerät bekannt. Die Lautsprecherausgänge des Audiogerätes werden elektronisch stumm geschaltet, wenn ein Ein- oder Ausgangssignal am Funkgerät vorhanden ist. Im weiteren ist ein Baustein vorhanden, der bei einem vorhandenen Ein- oder Ausgangssignal am Funkgerät den Lautsprecher an den Lautsprecherausgang des Funkgerätes schaltet und ihn gleichzeitig vom Lautsprecherausgang des Audiogerätes trennt.

Ausgehend von diesem Stand der Technik liegt der Erfindung die Aufgabe zugrunde, eine Kraftfahrzeugkommunikationsvorrichtung mit den im Oberbegriff des Anspruchs 1 angegebenen Merkmalen im Hinblick auf die genannten Nachteile zu verbessern.

Diese Aufgabe wird bei einer Kraftfahrzeugkommunikationsvorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß während der Dauer von Telefongesprächen durch die automatische Einstellung der Mikrofonempfindlichkeit in Abhängigkeit vom momentanen Verstärkungsfaktor des Verstärkers im Autoradio keine Rückkopplungen mehr auftreten und daß die Halleffekte bekannter Kraftfahrzeugkommunikationsvorrichtungen weitestgehend reduziert sind. Dies bedeutet eine bessere Verständlichkeit der Worte des Gesprächspartners. Weiterhin entfällt für den Benutzer die Notwendigkeit, bei eingestelltem hohen Verstärkungsfaktor, wie er oft beim Hören von Musik oder auch Nachrichten vom Autofahrer gewünscht wird, den Verstärkungsfaktor durch Verstellen des Lautstärkereglers der Autoradio-Bedieneinheit zu verändern, wenn ein Telefongespräch eingeht. Dies ermöglicht eine freie Wahl der Lautstärke während eines Telefongesprächs, ohne daß dadurch die Sprachverständlichkeit beeinträchtigt wird.

Die Vorteile einer Kraftfahrzeugkommunikationsvorrichtung mit den im Patentanspruch 2 angegebenen Merkmalen bestehen darin, daß zur Übertragung der vom Mobiltelefon zum Autoradio geführten Signale ein Line-Eingang des Autoradios verwendet werden kann, wie ihn viele Autoradios bereits aufweisen.

Die im Anspruch 3 angegebene Übertragung über einen Datenbus ermöglicht es, gleichzeitig verschiedenartige Informationen vom Autoradio zur Freisprecheinheit zu übertragen, wobei diese Übertragung bidirektional sein kann.

Die Verwendung eines optischen Datenbusses, wie sie im Anspruch 4 angegeben ist, erlaubt eine kabelfreie Informationsübertragung.

Die im Anspruch 6 angegebene Verwendung eines Mikrocomputers zur Einstellung der Mikrofonempfindlichkeit erlaubt es, diese Einstellung softwaregesteuert durchzuführen, wobei diese Einstellung auch nichtlinear erfolgen kann.

Die Vorteile der Merkmale des Anspruchs 7 bestehen darin, daß die Informationen über den momentan eingestellten Verstärkungsfaktor nicht erst ermittelt werden müssen, sondern vom Mikrocomputer des Autoradios zur Verfügung gestellt werden. Diesem Mikrocomputer werden die mittels der Bedieneinheit des Autoradios eingegebenen Bedienbefehle zugeführt, beispielsweise die Befehle zur Erhöhung oder Verminderung des Lautstärkefaktors des Verstärkers. Folglich sind diese Informationen über den momentan eingestellten Verstärkungsfaktor im Mikrocomputer ohnehin vorhanden.

Durch die im Anspruch 8 angegebenen Merkmale wird eine indirekte Information über den momentan eingestellten Verstärkungsfaktor zur Verfügung gestellt.

Das im Anspruch 9 angegebene Empfindlichkeitseinstellelement ermöglicht eine manuelle Einstellung einer Grundempfindlichkeit.

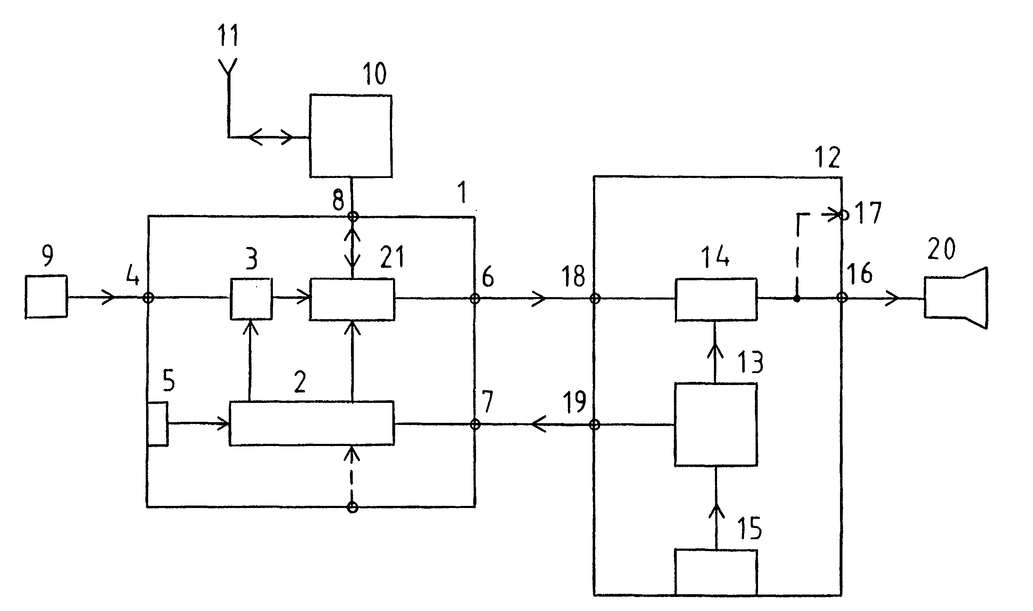

Weitere vorteilhafte Eigenschaften der Erfindung ergeben sich aus der Erläuterung eines Ausführungsbeispiels anhand der Figur.

Diese zeigt ein Blockschaltbild einer Kraftfahrzeugkommunikationsvorrichtung gemäß der Erfindung, wobei in diesem Blockschaltbild nur die zum Verständnis der Erfindung notwendigen Baugruppen dargestellt sind.

Die gezeigte Kraftfahrzeugkommunikationsvorrichtung weist ein ausgangsseitig mit einem Lautsprecher 20 verbundenes Autoradio 12, eine Freisprecheinheit 1 mit einem Mikrofon 9 und ein mit einer Sende- und Empfangsantenne 11 verbundenes Mobiltelefon 10 auf.

Das Autoradio 12 hat eine Bedieneinheit 15, mittels der Bedienbefehle eingebbar sind, beispielsweise Befehle zur Erhöhung oder Verminderung der Lautstärke. Diese Bedienbefehle werden einem zur Gerätesteuerung vorgesehenen Mikrocomputer 13 zugeführt, welcher die genannten Bedienbefehle in Stellinformation bzw. Steuersignale für einen Verstärker 14 umsetzt. Mittels dieser Steuersignale wird der Verstärkungsfaktor des Verstärkers in gewünschter Weise eingestellt. Über diesen Verstärker 14 werden im Radiobetrieb die von der nicht gezeichneten Autoradioantenne abgeleiteten Rundfunksignale, im Kassettenbetrieb die Kassettenwiedergabesignale und im Telefonbetrieb die von der Sende- und Empfangsantenne 11 des Mobiltelefons abgeleiteten Gesprächssignale des Gesprächspartners geleitet. Diese Signale werden über den Lautsprecherausgang 16 des Autoradios dem Lautsprecher 20 zugeführt und von diesem abgestrahlt.

Geht nun während eines Zeitraumes, in dem die Kraftfahrzeugkommunikationsvorrichtung sich im Radiobetrieb befindet, und in dem der Verstärkungsfaktor des Verstärkers 14 auf einen hohen Wert eingestellt ist, ein Telefonanruf ein, dann werden Signale von der Antenne 11 empfangen und im Mobiltelefon in bekannter Weise verarbeitet. Von dort aus gelangen sie über den Anschluß 8 an die Freisprecheinheit 1 und werden dort über einen in der Signalverarbeitungsschaltung 21 enthaltenen Umschalter an einen Line-Ausgang 6 der Freisprecheinheit 1 weitergeleitet. Vom Line-Ausgang 6 der Freisprecheinheit 1 werden sie an einen Line-Eingang 18 des Autoradios angelegt und von dort aus dem Verstärker 14 zugeführt. Weiterhin wird vom Mikrocomputer 13 des Autoradios 12 ein Datensignal zur Verfügung gestellt, welches Informationen über den momentan eingestellten Verstärkungsfaktor des Verstärkers 14 enthält. Diese Information wird über einen Ausgang 19 des Autoradios mittels eines Datenbusses einem Eingang 7 der Freisprecheinheit 1 zugeführt und von dort aus an den Mikrocomputer 2 der Freisprecheinheit weitergeleitet. Dieser setzt die erhaltene Information über den momentan eingestellten Verstärkungsfaktor in ein Stell- bzw. Steuersignal für eine Schaltung 3 zur Einstellung der Mikrofonempfindlichkeit um. In dieser Schaltung wird die Mikrofonempfindlichkeit an den genannten Verstärkungsfaktor angepaßt. Ist der Verstärkungsfaktor momentan auf einen großen Wert eingestellt, dann wird die Mikrofonempfindlichkeit verringert. Liegt hingegen momentan ein kleiner Verstärkungsfaktor vor, dann wird die Mikrofonempfindlichkeit erhöht.

Diese Veränderung der Mikrofonempfindlichkeit kann sowohl linear als auch nichtlinear erfolgen. Insbesondere können bei dieser Einstellung auch die Eigenschaften des menschlichen Hörapparates berücksichtigt werden, beispielsweise auch im Hinblick auf das Frequenzverhalten des Signals.

Durch die lautstärkeabhängige Empfindlichkeitseinstellung wird in vorteilhafter Weise erreicht, daß die Sprachsignale des Gesprächspartners auch bei momentan eingestelltem hohen Verstärkungsfaktor nicht so laut über den Lautsprecher 20 wiedergegeben werden, daß Halleffekte und Rückkopplungen auftreten. Dies führt zu einer wesentlichen Verbesserung der Verständlichkeit der Sprachsignale des Gesprächspartners.

Die während des Telefonats vom Autofahrer stammenden Sprachsignale werden vom Mikrofon 9 aufgenommen und der Freisprecheinheit über den Anschluß 4 zugeführt. Von dort aus werden sie über die Schaltung 3 zur Einstellung der Mikrofonempfindlichkeit an eine Signalverarbeitungsschaltung 21 geleitet, die ebenfalls vom Mikrocomputer 2 gesteuert wird. Über einen in der Signalverarbeitungsschaltung 2 angeordneten Umschalter werden die Signale dann an den Anschluß 8 der Freisprecheinheit geführt, von dort aus an das Mobiltelefon 10 weitergegeben und schließlich von der Antenne 11 aus an den Gesprächspartner abgesendet.

Die Informationen über den momentan eingestellten Verstärkungsfaktor können - wie oben beschrieben - über einen Datenbus vom Autoradio 12 zur Freisprecheinheit 1 übertragen werden. Bei diesem Datenbus handelt es sich vorzugsweise um einen optischen Datenbus, so daß zur Übertragung der genannten Informationen kein Verkabelungsaufwand notwendig ist.

Die genannten Informationen können aber alternativ dazu auch über ein Signalkabel, d.h. über einen Leitungsbus, übertragen werden.

Weiterhin kann die genannte Information über den momentan eingestellten Verstärkungsfaktor auch indirekt durch ein Abgreifen des Ausgangssignals des Verstärkers 14 bzw. der Autoradioendstufe erzeugt und an einem Ausgang 17 des Autoradios zur Verfügung gestellt werden. Dies ist in der Figur gestrichelt angedeutet. Das am Ausgang 17 des Autoradios vorliegende Signal wird alternativ oder zusätzlich zu dem bereits oben genannten Signal, welches über den Ausgang 19 des Autoradios ausgegeben wird, dem Mikrocomputer 2 der Freisprecheinheit 1 zugeführt. Auch dies ist in der Figur gestrichelt angedeutet.

Ferner weist die Freisprecheinheit 1 eine Taste 5 bzw. ein Empfindlichkeitseinstellelement auf zur manuellen Anpassung der Mikrofonempfindlichkeit an das Ausgangssignal der Autoradioendstufe. Mittels dieser Taste kann der Benutzer die Empfindlichkeit des Mikrofons auch von Hand verändern.

Treten während eines Telefongespräches Sprachpausen auf, dann wird die Mikrofonempfindlichkeit vom Mikrocomputer 2 auf einen Grundwert eingestellt, der von Stellung des Empfindlichkeitseinstellelementes abhängig ist.

## Patentansprüche

1. Kraftfahrzeugkommunikationsvorrichtung, mit
- einem Autoradio, welches einen Mikrocomputer, eine Bedieneinheit und einen Verstärker mit steuerbarem Verstärkungsfaktor aufweist,
- einem an eine Sende- und Empfangsantenne angeschlossenen Mobiltelefon und
- einer Freisprecheinheit, die ein Mikrofon und einen Signalausgang aufweist,
wobei vom Mobiltelefon empfangene Signale über die Freisprecheinheit und den im Autoradio angeordneten Verstärker einem Lautsprecher zuführbar sind,
**dadurch gekennzeichnet, daß**
zwischen dem Autoradio (12) und der Freisprecheinheit (1) eine Datenverbindung (7, 19) besteht, über die vom Autoradio zur Freisprecheinheit ein Datensignal übertragbar ist, welches Informationen über den momentan eingestellten Verstärkungsfaktor des Verstärkers (14) enthält, und daß die Freisprecheinrichtung (1) Mittel (2, 3) zur Einstellung der Empfindlichkeit des Mikrofons (9) in Abhängigkeit vom momentan eingestellten Verstärkungsfaktor des Verstärkers aufweist.

2. Kraftfahrzeugkommunikationsvorrichtung nach Anspruch 1,
**dadurch gekennzeichnet, daß**
die Freisprecheinheit (1) einen Line-Ausgang (6) und das Autoradio (12) einen Line-Eingang (18) aufweist und daß die vom Mobiltelefon empfangenen Signale vom Line-Ausgang (6) der Freisprecheinheit dem Line-Eingang (18) des Autoradios zuführbar sind.

3. Kraftfahrzeugkommunikationsvorrichtung nach Anspruch 1 oder 2,
**dadurch gekennzeichnet, daß**
die Freisprecheinheit (1) und das Autoradio (12) über einen Datenbus miteinander verbunden sind und daß die Informationen über den momentan eingestellten Verstärkungsfaktor der Freisprecheinheit über den Datenbus zuführbar sind.

4. Kraftfahrzeugkommunikationsvorrichtung nach Anspruch 3,
**dadurch gekennzeichnet, daß**
der Datenbus ein optischer Datenbus ist.

5. Kraftfahrzeugkommunikationsvorrichtung nach Anspruch 3,
**dadurch gekennzeichnet, daß**
der Datenbus ein Leitungsbus ist.

6. Kraftfahrzeugkommunikationsvorrichtung nach einem oder mehreren der vorhergehenden Ansprüche,
**dadurch gekennzeichnet, daß**
die Mittel zur Einstellung der Empfindlichkeit des Mikrofons einen Mikrocomputer (2) aufweisen.

7. Kraftfahrzeugkommunikationsvorrichtung nach einem oder mehreren der vorhergehenden Ansprüche,
**dadurch gekennzeichnet, daß**
die Informationen über den momentan eingestellten Verstärkungsfaktor im Mikrocomputer des Autoradios erzeugbar sind.

8. Kraftfahrzeugkommunikationsvorrichtung nach einem oder mehreren der vorhergehenden Ansprüche,
**dadurch gekennzeichnet, daß**
die Informationen über den momentan eingestellten Verstärkungsfaktor aus dem Ausgangsignal der Autoradioendstufe ableitbar sind.

9. Kraftfahrzeugkommunikationsvorrichtung nach einem oder mehreren der vorhergehenden Ansprüche,
**dadurch gekennzeichnet, daß**
die Freisprecheinheit (1) ein Empfindlichkeitseinstellelement (5) zur manuellen Anpassung der Mikrofonempfindlichkeit an das Ausgangssignal der Autoradioendstufe aufweist.

10. Kraftfahrzeugkommunikationsvorrichtung nach einem oder mehreren der vorhergehenden Ansprüche,
**dadurch gekennzeichnet, daß**
die Einstellung der Empfindlichkeit des Mikrofons derart erfolgt, daß sie bei großem Verstärkungsfaktor reduziert und bei kleinem Verstärkungsfaktor erhöht ist.

11. Kraftfahrzeugkommunikationsvorrichtung nach einem oder mehreren der vorhergehenden Ansprüche,
**dadurch gekennzeichnet, daß**
beim Vorliegen von Sprachpausen die Mikrofonempfindlichkeit auf einen Grundwert eingestellt wird.

## Claims

1. A motor vehicle communications apparatus, having
- a car radio which has a microcomputer, an operating unit and an amplifier with a controllable amplification factor;
- a mobile telephone connected to a transmission and reception antenna; and
- a hands-free unit which has a microphone and a signal output, wherein signals received by the mobile telephone can be delivered to a loudspeaker via the hands-free unit and the amplifier arranged in the car radio,
**characterized in that** a data link (7, 19) exists between the car radio (12) and the hands-free unit (1) and a data signal can be transmitted via it from the car radio to the hands-free unit, said data signal containing information on the momentarily set amplification factor of the amplifier (14); and **in that** the hands-free device (1) has means (2, 3) for the setting of the sensitivity of the microphone (9) in dependence on the momentarily set amplification factor of the amplifier.

2. A motor vehicle communications apparatus in accordance with claim 1, **characterized in that** the hands-free unit (1) has a line output (6) and the car radio (12) has a line input (18); and **in that** the signals received by the mobile telephone can be delivered from the line output (6) of the hands-free unit to the line input (18) of the car radio.

3. A motor vehicle communications apparatus in accordance with claim 1 or claim 2, **characterized in that** the hands-free unit (1) and the car radio (12) are connected to one another via a databus; and **in that** the information on the momentarily set amplification factor can be delivered to the hands-free unit via the databus.

4. A motor vehicle communications apparatus in accordance with claim 3, **characterized in that** the databus is an optical databus.

5. A motor vehicle communications apparatus in accordance with claim 3, **characterized in that** the databus is a conductor bus.

6. A motor vehicle communications apparatus in accordance with one or more of the preceding claims, **characterized in that** the means for setting the sensitivity of the microphone have a microcomputer (2).

7. A motor vehicle communications apparatus in accordance with one or more of the preceding claims, **characterized in that** the information on the momentarily set amplification factor can be produced in the microcomputer of the car radio.

8. A motor vehicle communications apparatus in accordance with one or more of the preceding claims, **characterized in that** the information on the momentarily set amplification factor can be derived from the output signal of the car radio end stage.

9. A motor vehicle communications apparatus in accordance with one or more of the preceding claims, **characterized in that** the hands-free unit (1) has a sensitivity setting element (5) for the manual adjustment of the microphone sensitivity to the output signal of the car radio end stage.

10. A motor vehicle communications apparatus in accordance with one or more of the preceding claims, **characterized in that** the setting of the sensitivity of the microphone takes place such that it is reduced with a large amplification factor and increased with a low amplification factor.

11. A motor vehicle communications apparatus in accordance with one or more of the preceding claims, **characterized in that** the microphone sensitivity is set to a base value when speech pauses occur.

## Revendications

1. Dispositif de communication dans un véhicule automobile, comportant
- un autoradio, qui comporte un micro-ordinateur, une unité de commande et un amplificateur possédant un facteur d'amplification commandable,
- un téléphone mobile raccordé à une antenne d'émission et de réception, et
- une unité de conversation mains libres, qui comporte un microphone et une sortie de signaux,
dans lequel des signaux reçus par le téléphone mobile peuvent être envoyés à un haut-parleur par l'intermédiaire de l'unité de conversation mains libres et de l'amplificateur disposé dans l'autoradio,
**caractérisé en ce que**
entre l'autoradio (12) et l'unité de conversation mains libres (1) il existe une liaison (7,19) de transmission de données, au moyen de laquelle peut être transmis, de l'autoradio à l'unité de conversation mains libres, un signal de données, qui contient des informations concernant le facteur d'amplification réglé instantanément de l'amplificateur (14), et que l'unité de conversation mains libres (1) comporte des moyens (2,3) pour régler la sensibilité du microphone (9) en fonction du facteur d'amplification réglé instantanément de l'amplificateur.

2. Dispositif de communication dans un véhicule automobile selon la revendication 1, **caractérisé en ce que** l'unité de conversation mains libres comporte une sortie de ligne (6) et l'autoradio (12) comporte une entrée de ligne (18) et que les signaux reçus par le téléphone mobile peuvent être envoyés par la sortie de ligne (6) de l'unité de téléphone mobile à l'entrée de ligne (18) de l'auto-radio.

3. Dispositif de communication dans un véhicule automobile selon la revendication 1 ou 2, **caractérisé en ce que** l'unité de conversation mains libres (1) et l'autoradio (12) sont reliés entre eux par l'intermédiaire d'un bus de transmission de données et que les informations concernant le facteur d'amplification réglé instantanément peuvent être envoyées à une unité de conversation mains libres par l'intermédiaire du bus de transmission de données.

4. Dispositif de communication dans un véhicule automobile selon la revendication 3, **caractérisé en ce que** le bus de transmission de données est un bus optique de transmission de données.

5. Dispositif de communication dans un véhicule automobile selon la revendication 3, **caractérisé en ce que** le bus de transmission de données est un bus formé de lignes.

6. Dispositif de communication dans un véhicule automobile selon une ou plusieurs des revendications précédentes, **caractérisé en ce que** les moyens pour régler la sensibilité du microphone comportent un micro-ordinateur (2).

7. Dispositif de communication dans un véhicule automobile selon une ou plusieurs des revendications précédentes, **caractérisé en ce que** les informations concernant le facteur d'amplification réglé instantanément peuvent être produites dans le micro-ordinateur de l'autoradio.

8. Dispositif de communication dans un véhicule automobile selon une ou plusieurs des revendications précédentes, **caractérisé en ce que** les informations concernant le facteur d'amplification réglé instantanément peuvent être dérivées du signal de sortie de l'étage final de l'autoradio.

9. Dispositif de communication dans un véhicule automobile selon une ou plusieurs des revendications précédentes, **caractérisé en ce que** l'unité de conversation mains libres (1) comporte un élément (5) de réglage de sensibilité servant à adapter manuellement la sensibilité du microphone au signal de sortie de l'étage final de l'auto-radio.

10. Dispositif de communication dans un véhicule automobile selon une ou plusieurs des revendications précédentes, **caractérisé en ce que** le réglage de la sensibilité du microphone s'effectue de telle sorte qu'elle est réduite dans le cas d'un facteur d'amplification élevé et qu'elle est accrue dans le cas d'un facteur d'amplification faible.

11. Dispositif de communication dans un véhicule automobile selon une ou plusieurs des revendications précédentes, **caractérisé en ce que**, lors de la présence de pauses de conversation, la sensibilité du microphone est réglée sur une valeur de base.
